# EUROPEAN PATENT SPECIFICATION

(11) **EP 3 878 666 B1**
(45) Date of publication and mention of the grant of the patent: **13.03.2024**
(21) Application number: 19903886.0
(22) Date of filing: 18.12.2019
(51) Int. Cl.: B60C 11/03, B60C 11/12, B60C 11/13

(54) **TIRE**
REIFEN
PNEUMATIQUE

(30) Priority: 27.12.2018 JP 2018244327
(43) Date of publication of application: 15.09.2021
(73) Proprietor: BRIDGESTONE CORPORATION, Chuo-ku Tokyo 104-8340 (JP)
(72) Inventor: TANAKA, Shoichi, Tokyo 104-8340 (JP); KATSUNO, Hiroyuki, Tokyo 104-8340 (JP)
(74) Representative: Marks & Clerk LLP
(86) International application number: PCT/JP2019/049586
(87) International publication number: WO 2020/137738

(56) References cited:
- EP-A1- 2 578 419
- EP-A1- 3 375 642
- JP-A- 2005 041 339
- JP-A- 2010 269 769
- JP-A- 2011 000 991
- JP-A- 2013 082 307
- JP-A- 2014 104 769
- JP-A- 2014 129 008
- JP-A- 2017 088 022
- US-A1- 2017 129 289

## Description

### TECHNICAL FIELD

The present invention relates to tires used for heavy load vehicles such as trucks and buses.

### BACKGROUND

Conventionally, there has been proposed a technique for improving on-ice performance while maintaining block rigidity by adopting, as a tread pattern of a tire used for heavy-load vehicles, the tread pattern in which circumferential direction sipes and width direction sipes are provided on blocks demarcated by circumferential direction grooves and width direction grooves, and depths of cuts of the circumferential direction sipes and the width direction sipes are set appropriately in accordance with groove depths of the circumferential direction grooves and the width direction grooves (see, for example, Patent Document 1). Attention is drawn to the disclosures of EP2578419A1 and EP3375642A1 which show tires with circumferential tread grooves delimiting blocks and with lateral sipes formed on surfaces of the blocks.

### CITATION DOCUMENT

### Patent Document

Patent Document 1: Japanese Unexamined Patent Application Publication No. 2013-121760.

### SUMMARY OF THE INVENTION

### Technical Problem

However, the on-ice starting performance of the tire disclosed in the above-mentioned Patent Document 1 had not always been necessarily sufficient.

The present invention has been made in view of the conventional problem, and aims at providing a tire with excellent on-ice starting performance.

### Solution to Problem

As a result of studying a relationship between the on-ice starting performance and a distance between sipes formed on surfaces of blocks, the inventor has found that when the distance between the sipes is set in a range of 4-12 mm, an actual ground contact area and shear deformation of small blocks divided by the sipes can be set in an optimum range with respect to the on-ice starting performance, hence has arrived at the present invention.

Namely, the present invention relates to a tire as claimed in claim 1.

[DELETED]

### BRIEF DESCRIPTION OF THE DRAWINGS

FIG. 1 is a diagram illustrating a tread pattern of a tire according to an embodiment of the present invention.
FIGS. 2A to 2C are diagrams each illustrating an example of a cross-sectional shape of a groove.
FIGS. 3A and 3B are diagrams each illustrating an example of a 3D sipe.
FIGS. 4A and 4B are diagrams each illustrating a relationship between sipes and block deformation.

### DESCRIPTION OF EMBODIMENT

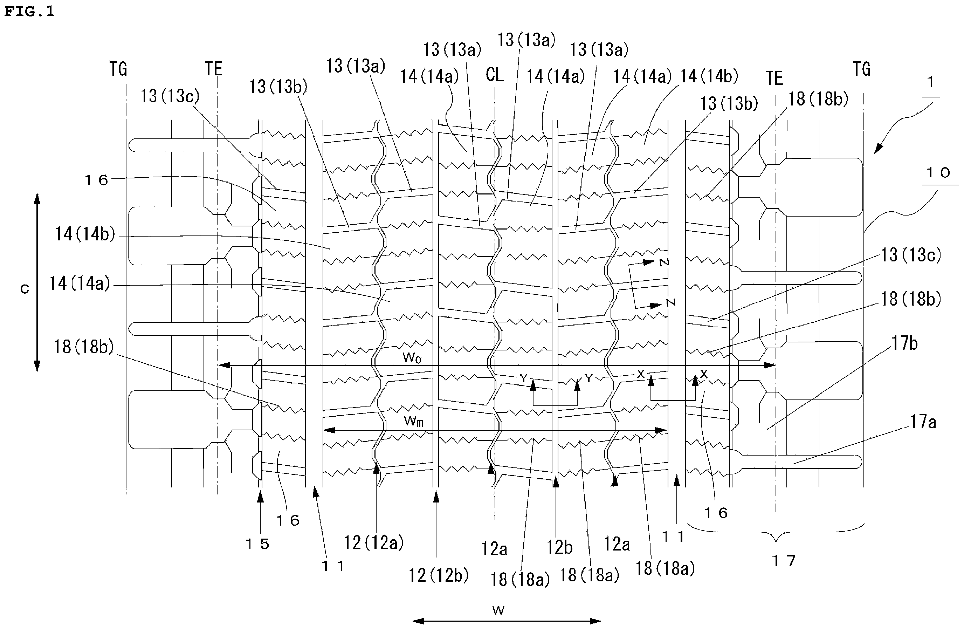

An embodiment of the present invention will be explained with reference to the drawings. FIG. 1 is a diagram illustrating a tread pattern of a tread part 10 of a tire 1 according to the present embodiment. In the figure, 11 denotes a circumferential direction main grooves; 12 (12a, 12b) denotes circumferential direction narrow grooves; 13 (13a, 13b, 13c) denotes width direction grooves; 14 (14a, 14b) denotes inner blocks demarcated by the circumferential direction main groove 11, the circumferential direction narrow groove 12a and the width direction narrow groove 13, or inner blocks demarcated by the circumferential direction narrow groove 12a, the circumferential direction narrow groove 12b and the width direction narrow groove 13 (13a, 13b); 15 denotes shoulder narrow grooves; 16 denotes outer blocks demarcated by the circumferential direction main groove 11, the shoulder narrow groove 15 and the width direction groove 13c; 17 denotes shoulder parts; and 18 (18a, 18b) denotes width direction sipes provided on the inner block 14 and the outer block 16, respectively.

The vertical direction shown by the sign C in the figure is a tire rotation direction which is a tire circumferential direction, and the right-left direction shown by the sign W is a tire width direction.

CL denotes a tire equatorial plane, TE denotes an end part in the tire width direction of a tire tread (hereinafter referred to as the "ground contact edge"), which is a part that the tread part 10 comes into contact with the ground, TG denotes a tread edge which is an end part of the tread part 10, a width direction distance between TE and TE is a ground contact width, and a width direction distance between TG and TG is a tread width.

The value of the ground contact width is a value obtained in a state in which the tire is mounted on a normal rim, which is the rim specified for each tire, is with a normal internal pressure and is loaded with a normal load (hereinafter referred to as the reference mount state).

The tire 1 of the present invention is used, for example, in heavily load vehicles such as trucks and buses.

The circumferential direction main grooves 11 are linear grooves with a wide groove width which extends continuously along the tire circumferential direction. The circumferential direction main grooves 11 are formed at positions, one on a right side and one on a left side, so as to be bilaterally symmetrical with respect to the equatorial plane CL.

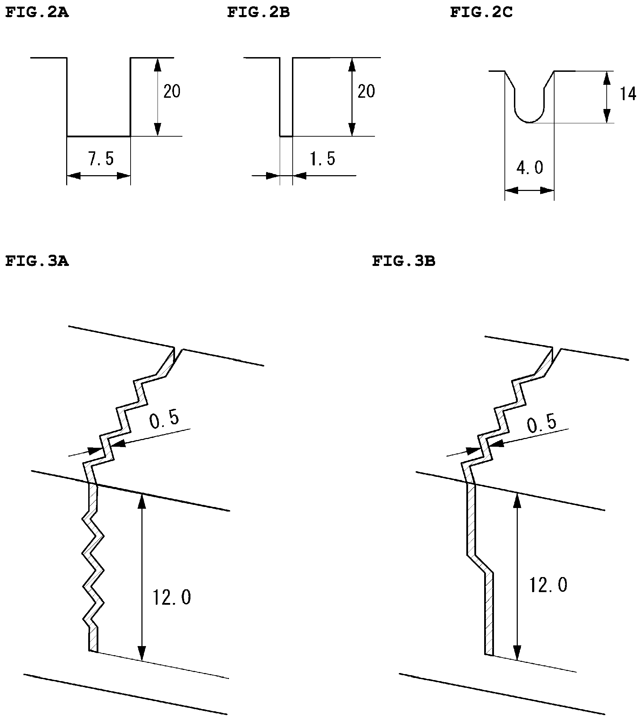

FIG. 2A is a cross-sectional view taken along the X-X line in FIG 1. In the present embodiment, the groove width of the circumferential direction main groove 11 was set to 7.5 mm and the groove depth was set to 20 mm, as illustrated in the figure.

The circumferential direction narrow grooves 12 are circumferential direction grooves formed inwards in the tire width direction relative to the two circumferential direction main grooves 11,11 and extending in the tire circumferential direction, a groove width of which is narrower than the groove width of the circumferential direction main groove 11. The groove width of the circumferential direction narrow groove 12 is formed to have a distance in an extent that, in the above-mentioned reference mount state, the inner blocks 14a and 14b, and the inner blocks 14a and 14a, which are the blocks on the both sides of the circumferential direction narrow grooves, come into contact with each other, respectively.

Hereinafter, among the circumferential direction narrow grooves 12, a zigzag-shaped circumferential direction groove is referred to as the circumferential direction narrow groove 12a, and a linear circumferential direction narrow groove is referred to as the circumferential direction narrow grooves 12b. In the present embodiment, three zigzag-shaped circumferential direction narrow grooves 12a were formed and two linear circumferential direction narrow grooves 12b were formed. One of the zigzag-shaped circumferential direction narrow grooves 12a was arranged at the width direction center of the tire 1, and the linear circumferential direction narrow grooves 12b were arranged respectively on the right side and the left side, outwardly in the tire width direction, of that one zigzag-shaped circumferential direction narrow groove 12a, and further, the zigzag-shaped circumferential direction narrow grooves were arranged respectively on the right side and the left side, outwardly in the tire width direction, of the linear circumferential direction narrow groove 12b. In other words, the zigzag-shaped circumferential direction grooves 12a and the linear circumferential direction grooves 12b were arranged alternately in the tire width direction.

FIG. 2B is a cross-sectional view taken along the Y-Y line in FIG. 1. In the present embodiment, the groove width of the circumferential direction narrow groove 12 was set to 1.5 mm, which is narrower than the groove width of the circumferential direction main groove 11, and the groove depth was set to 20 mm, as illustrated in the figure. Incidentally, the groove depth of the circumferential direction narrow groove 12 is preferably set to be equal to or less than the groove depth of the circumferential direction main groove 11.

The width direction grooves 13 are linear grooves extending in a direction intersecting the tire circumferential direction. Among the width direction grooves 13, a width direction groove extending from a circumferential direction narrow groove to a circumferential direction narrow groove adjacent to the circumferential direction narrow groove is referred to as the first width direction groove 13a, and a width direction groove extending from the circumferential direction narrow groove to the circumferential direction main groove is referred to as the second width direction groove 13b.

Any of the width direction grooves, whose one end opens into the zigzag-shaped circumferential direction narrow groove 12a arranged at the tire width direction center and the other end opens into the linear circumferential direction narrow groove 12b, is the first width direction groove 13a. Any of the width direction grooves, whose one end opens into the zigzag-shaped circumferential direction narrow groove 12a arranged outwardly, in the tire width direction, of the linear circumferential direction narrow groove 12b and the other end opens into the linear circumferential direction narrow groove 12 b, is also the first width direction groove 13a.

Any of the width direction grooves, whose one end opens into the zigzag-shaped circumferential direction narrow groove 12a and the other end opens into the circumferential direction main groove 11, is the second width direction groove 13b.

Incidentally, when no distinction is made between the first width direction groove 13a and the second width direction groove 13b, both of the first and second width direction grooves 13a and 13b are referred to as the inner width direction groove 13.

The width direction groove, whose one end opens into the circumferential direction main groove 11 and the other end opens into the shoulder narrow groove 15, is referred to as the outer width direction groove 13c.

In the present embodiment, the width direction groove 13 has a groove width narrower than the groove width of the circumferential direction main groove 11, and the position of the width direction groove 13 formed on one side, in the tire width direction, of the circumferential direction narrow groove 12 and the position of the width direction groove 13 formed on the other side are shifted from each other by a predetermined distance in the tire circumferential direction (here, about one third (1/3) of the length between two width direction grooves 13 adjoining in the tire circumferential direction).

FIG. 2C is a cross-sectional view taken along the Z-Z line in FIG. 1. As illustrated in the figure, the groove width of the width direction groove 13 of the present embodiment is set to 4.0 mm, which is narrower than the groove width of the circumferential direction main groove 11 and wider than the circumferential direction narrow groove 12, and the groove depth is shallower than the groove depths of the circumferential direction main groove 11 and the circumferential direction narrow groove 12, and is 15 mm for the first wide direction groove 13a and 14 mm for the second wide direction groove 13b.

The inner block 14 comprises a first block 14a demarcated by a circumferential direction narrow groove, a circumferential direction narrow groove adjacent to the circumferential direction narrow groove, and two first width direction grooves 13a adjoining in the tire circumferential direction, and a second block 14b demarcated by the circumferential direction main groove 11, the circumferential direction narrow groove (in this case, the zigzag-shaped circumferential direction narrow groove 12a) adjacent to the circumferential direction main groove 11, and two second width direction grooves 13b adjoining in the tire circumferential direction.

The first block 14a includes a block demarcated by the zigzag-shaped circumferential direction narrow groove 12a arranged at the tire width direction center, the first width direction groove 13a whose one end is opened into the circumferential direction narrow groove 12a and the other end is opened into the linear circumferential direction narrow groove 12b arranged outwardly, in the tire width direction, of the circumferential direction narrow groove 12a, and the linear circumferential direction groove 12b, and a block demarcated by the linear circumferential direction narrow groove 12b, the first width direction groove 13a whose one end is opened into the circumferential direction narrow groove 12b and the other end is opened into the zigzag-shaped circumferential direction narrow groove 12a arranged outwardly, in the tire width direction, of the circumferential direction narrow groove 12b, and the zigzag-shaped circumferential direction narrow groove 12a. The second block 14b is a block demarcated by the zigzag-shaped circumferential direction narrow groove 12a, the second width direction groove 13b whose one end is opened into the circumferential direction narrow groove 12a and the other end is opened into the circumferential direction main groove 11 arranged outwardly, in the tire width direction, of the circumferential direction narrow groove 12a, and the circumferential direction main groove 11.

When no distinction is made between the first block 14a and the second block 14b, the first block 14a and the second block 14b are referred to as the inner block 14.

The shoulder narrow groove 15 is a linear groove formed outwardly, in the tire circumferential direction, of the circumferential direction main groove 11. The outer block 16 is demarcated by the circumferential direction main groove 11, the shoulder narrow groove 15 and the third width direction groove 13c.

The shoulder part 17 includes the outer block 16 and a region outwards in the tire width direction demarcated by the shoulder narrow groove 15, and, in the region outwards in the tire width direction, a shoulder lateral groove 17a and a shoulder land part 17b exist.

Width direction sipes 18 (18a, 18b), which extend in a direction intersecting the tire circumferential direction, are provided on surfaces of the inner block 14 and the outer block 16, respectively.

Of the width direction sipes 18, the width direction sipe formed on the surface of the inner block 14 is the width direction sipe 18a, and the width direction sipe formed on the surface of the outer block 16 is the width direction sipe 18b.

The groove width of the width direction sipes 18 is about 0.5 mm, and the groove depth is 12 mm for the width direction sipe 18a and 10.5 mm for the width direction sipe 18b. It is preferable to set the groove depth to be shallower than the groove depth of the width direction groove 13.

As the width direction sipe 18, a 3D sipe having a zigzag shape viewed from the tire tread and a zigzag shape in the depth direction, as illustrated in FIG. 3A, or a well-known 3D sipe having a bend part in the depth direction, as illustrated in FIG. 3B, may be employed.

In the present embodiment, a distance between the width direction sipes 18 is set in the range of 4-12 mm, so as to effectively exhibit the on-ice starting performance of the tire 1. Hereinafter, the distance between the width direction sipes 18 is referred to as the "sipe distance."

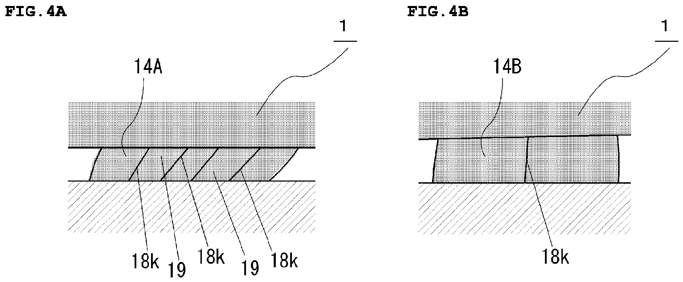

FIG. 4A is a diagram illustrating deformation of blocks 14A with the distance between the width direction sipes less than 4 mm which is the range set in the present invention. In the case where the sipe distance is less than 4 mm, the ground contact area is reduced because of heavy leaning of small blocks 19 demarcated by the width direction sipes 18k. As a result, the driving force is not fully exhibited. Therefore, since it takes a time to reach a predetermined speed, the on-ice starting performance is degraded.

FIG. 4B is a diagram illustrating deformation of blocks 14B with the distance between the width direction sipes exceeding 12mm. When the sipe distance exceeds 12mm, even though the driving force is exhibited, not only small blocks demarcated by the width direction sipes (in this case, the small blocks demarcated by the width direction sipes 18k and the sides in the tire circumferential direction of the block 14B) slide quickly, but also shear deformation is small. Therefore, driving force is not fully exhibited.

As the distance between the sipes 18, it is preferable to set in the range of 4-12 mm, and it is more preferable to set in the range of 6-10 mm.

Further, the circumferential direction narrow grooves 12 were provided, which have the groove width narrower than the groove width of the circumferential direction main grooves 11 and formed to have a distance in an extent that the blocks 14 on both sides of the circumferential direction narrow grooves come into contact with each other when the tire is rolling, so as to be able to suppress the shear deformation and the compressive deformation of the blocks 14 relative to the tire width direction, by virtue of the mutual support effect of the adjoining blocks 14 during ground contact time. Hence, while ensuring the on-ice performance, both the low rolling resistance and the wear resistance performance can be satisfied.

Furthermore, the zigzag-shaped circumferential direction narrow groove 12a and the linear circumferential direction narrow groove 12b were arranged alternately in the tire width direction, and the contact area of the blocks 14 was broadened by the zigzag-shaped circumferential direction narrow grooves 12a so as to increase the shear rigidity and the compression rigidity of the blocks 14, and receive complex deformation caused by the contact between the blocks 14 by the linear circumferential direction narrow groove 12b. Therefore, an uneven wear occurring on the blocks 14 can be effectively suppressed.

In the present embodiment, as described above, the groove width of the circumferential direction main groove 11 was set to 7.5 mm and the groove depth was set to 20 mm, and the groove width of the circumferential direction narrow groove 12 was set to 1.5 mm and the groove depth was set to 20 mm. However, as the groove width of the circumferential direction narrow groove 12, it is preferable to set in the range of 0.5-4.0 mm, and it is more preferable to set in the range of 1.0-3.0 mm.

This is because when the groove width of the circumferential direction narrow groove 12 is less than 0.5 mm, the contact between the blocks 14 located on both sides in the tire width direction across the circumferential direction narrow groove 12 becomes excessive, and as a result, heat generation increases, thus the rolling resistance increases. On the contrary, when the groove width exceeds 4.0 mm, the blocks 14 do not come into contact with each other, and the shear rigidity and the compressive rigidity of the blocks 14 are decreased, thus the on-ice performance, the rolling resistance and the wear resistance performance are deteriorated.

Furthermore, since the groove width of the width direction groove 13 was set to be narrower than the groove width of the circumferential direction main groove 11, and the position of the width direction groove 13 formed on one side, in the tire width direction, of the circumferential direction narrow groove 12 and the position of the width direction groove 13 formed on the other side were shifted from each other in the tire circumferential direction, the shear deformation and the compressive deformation of the blocks 14 were able to be suppressed relative to the tire circumferential direction, by virtue of the mutual support effect of the adjoining blocks 14 at the time when contacting the ground. Hence, while ensuring the on-ice performance, both the low rolling resistance and the wear resistance performance can be satisfied.

In the present embodiment, as described above, the groove width of the width direction groove 13 was set to 4.0 mm and the groove depth was set to 14 mm. However, as the groove width of the width direction groove 13, it is preferable to set in the range of 2.0-8.0 mm, and it is more preferable to set in the range of 4.0-7.0 mm.

This is because when the groove width of the width direction groove 13 is less than 2.0 mm, the contact length between the blocks 14 located on the right and left sides in the tire width direction across the tire circumferential direction narrow groove 12 becomes longer, and as a result, heat generation increases, thus the rolling resistance increases. On the contrary, when the groove width exceeds 8.0 mm, the contact length between the blocks 14 becomes shorter, and the shear rigidity and the compressive rigidity of the blocks 14 are degraded, thus the wear resistance performance is deteriorated.

In the present embodiment, the groove widths of the circumferential direction narrow groove 12 and the width direction groove 13 are set in consideration of a groove area ratio (negative ratio) of the region surrounded by two circumferential direction main grooves 11, 11. The groove area ratio (negative ratio) is the percentage of (groove area) / (groove area + land part area) in the region that is in contact with the ground. In the present embodiment, all of the regions surrounded by two circumferential direction main grooves 11, 11 are assumed to be in contact with the ground.

In the present embodiment, the negative ratio was set in the range of 4-20%, however it is more preferable to set in the range of 9-16%. With this configuration, a mutual support region of the adjoining blocks 14 can be made appropriate. As a result, since the shear deformation and the compressive deformation during block rolling can be suppressed, the low rolling resistance and the wear resistance performance can be improved.

When the negative ratio is set to be less than 4%, the contact between the blocks 14 becomes excessive and heat generation increases, thus the rolling resistance increases. On the contrary, when the negative ratio exceeds 20%, the blocks 14 do not contact with each other sufficiently, and the shear rigidity and the compressive rigidity of the blocks 14 are degraded, thus the wear resistance performance is deteriorated.

In the present embodiment, as illustrated in FIG. 1, a distance Wₘ between the circumferential direction main grooves 11, 11 is set in a range of 39-79% of a tire ground contact width W₀, which is a width direction distance between TE and TE. With this configuration, the mutual support effect of the blocks can be effectively exhibited, thus the shear rigidity and the compressive rigidity can be increased. Hence, while ensuring the on-ice performance, both the low rolling resistance and the wear resistance performance can be satisfied.

When the distance Wₘ between the circumferential direction main grooves 11, 11 is less than 39% of the tire ground contact width W₀, the mutual support region of the blocks becomes narrower, thus the shear rigidity and the compressive rigidity become small, and as a result, the on-ice performance, the rolling resistance and the wear resistance performance are degraded.

Conversely, when the distance Wₘ between the circumferential direction main grooves 11, 11 exceeds 79% of the tire ground contact width W₀, the mutual support region of the blocks becomes too wide, thus the amount of tread rubber increases, and as a result, the weight of the tire becomes heavy, hence the rolling resistance increases.

Therefore, it is preferable to set the distance Wₘ between the circumferential direction main grooves 11, 11 in the range of 39-79% of the tire ground contact width W₀ , and it is more preferable to set in the range of 53-66%.

The present invention has been described using the embodiment, however, the technical scope of the present invention is not limited to the scope described in the above-described embodiment. It is apparent to those skilled in the art that various modifications or improvements can be made to the above-described embodiment. It is clear from the claims that any forms with such modifications or improvements may also be included in the technical scope of the present invention.

For example, in the above-described embodiment, the number of the circumferential direction narrow grooves 12 was set to five, but the number is not limited thereto. In a form not according to the present invention, all of the circumferential direction narrow grooves 12 may be formed as the zigzag-shaped circumferential direction narrow grooves 12a, or may be formed as the linear circumferential direction narrow grooves 12b.

Instead of the zigzag-shaped circumferential direction narrow grooves 12a, wave-shaped circumferential direction narrow grooves may be provided.

Incidentally, in a case where both the zigzag-shaped circumferential direction narrow groove 12a and the linear circumferential direction narrow groove 12b are used as the circumferential direction narrow grooves 12, it is preferable to set the number of the circumferential direction narrow grooves 12 to an odd number. With this configuration, the uneven wear on the right and left sides in the tire width direction can be prevented.

In the above-described embodiment, inclinations of the width direction grooves 13a and 13b were set to be the same, however, the inclinations of the width direction grooves 13a and 13b may be varied in the tire width direction such that the inclinations become larger as going outward in the tire width direction (inclined in the tire circumferential direction).

In the above-described embodiment, the outer block 16 was formed by demarcating the land part surrounded by the circumferential direction main groove 11 and the shoulder narrow groove 15 by the width direction grooves 13c to form the outer block 16, however, the land part may be demarcated by other width direction grooves such as the width direction grooves extending in the tire width direction. Alternatively, the land part surrounded by the circumferential direction main groove 11 and the shoulder narrow groove 15 may be formed as a rib-shaped land part.

In the above-described embodiment, the width direction sipes were formed to be 3D sipes, however, 2D sipes may be provided instead of the 3D sipes.

In summary, with the configuration of the present invention, the on-ice starting performance can be enhanced, thus the driving safety performance on icy roads can be improved.

### REFERENCE SIGN LIST

1: Tire, 10: Tread part, 11: Circumferential direction main groove, 12a, 12b: Circumferential direction narrow grooves, 13a, 13b, 13c: Width direction grooves, 14a, 14b: Inner blocks, 15: Shoulder narrow groove, 16: Outer block, 17: Shoulder part, 17a: Shoulder lateral groove, 17b: Shoulder land part, 18: Width direction sipe, CL: Tire equatorial plane, TE: Ground contact edge, TG: Tread edge.

## Claims

1. A tire (1) provided with a plurality of circumferential direction grooves (11, 12, 15) formed on a tread of the tire (1) and extending in a tire circumferential direction, a plurality of width direction grooves (13) extending in a direction intersecting the tire circumferential direction, a plurality of blocks (14, 16) demarcated by the circumferential direction grooves (11, 12, 15) and the width direction grooves (13), and a plurality of width direction sipes (18) formed on surfaces of the blocks (14, 16) and extending in the direction intersecting the tire circumferential direction,
wherein a distance between the sipes (18) is set in a range of 4-12 mm,
wherein the circumferential direction grooves (11, 12, 15) include two circumferential direction main grooves (11) each formed on each of sides in a tire width direction across an equatorial plane (CL) of the tire tread and extending in the tire circumferential direction, and one or a plurality of circumferential direction narrow grooves (12) formed inwards in a tire width direction relative to the circumferential direction main grooves,
the circumferential direction narrow grooves (12) have a groove width narrower than a groove width of the circumferential direction main grooves (11), and formed to have a distance in an extent that the blocks (14) on both sides of the circumferential direction narrow grooves (12) come into contact with each other when the tire (1) is rolling,
the width direction grooves (13) have a groove width narrower than the groove width of the circumferential main grooves (11), and
a position of the width direction groove (13) formed on one side, in the tire width direction, of the circumferential direction narrow groove (12) and a position of the width direction groove (13) formed on the other side, in the tire width direction, of the circumferential direction narrow groove (12) are shifted from each other by a predetermined distance in the tire circumferential direction, and
**characterised in that**
the tire (1) is provided with a linear circumferential direction narrow groove (12b) and a wavy or a zigzag circumferential direction narrow groove (12a), which are arranged alternately in the tire width direction.

2. The tire (1) according to Claim 1, wherein a groove area ratio in a width direction region surrounded by the circumferential direction main grooves (11) is set in a range of 4-20%.

3. The tire (1) according to Claim 1 or Claim 2,wherein a distance between the two circumferential direction main grooves (11) is set in a range of 39- 79% of a tire ground contact width.

4. The tire (1) according to any of Claims 1 to 3, wherein the groove width of the width direction grooves (13) is set in a range of 2.0-8.0 mm.

5. The tire (1) according to any of Claims 1 to 4, wherein the width direction sipes (18) are 3D sipes.

## Patentansprüche

1. Reifen (1), der mit einer Vielzahl von Umfangsrichtungsrillen (11, 12, 15), die auf einer Lauffläche des Reifens (1) geformt sind und sich in einer Reifenumfangsrichtung erstrecken, einer Vielzahl von Breitenrichtungsrillen (13), die sich in einer Richtung erstrecken, welche die Reifenumfangsrichtung schneidet, einer Vielzahl von Blöcken (14, 16), die durch die Umfangsrichtungsrillen (11, 12, 15) und die Breitenrichtungsrillen (13) abgegrenzt werden, und einer Vielzahl von Breitenrichtungslamellen (18), die auf Oberflächen der Blöcke (14, 16) geformt sind und sich in der Richtung erstrecken, welche die Reifenumfangsrichtung schneidet, versehen ist,
wobei ein Abstand zwischen den Lamellen (18) in einem Bereich von 4 bis 12 mm festgesetzt ist,
wobei die Umfangsrichtungsrillen (11, 12, 15) zwei Haupt-Umfangsrichtungsrillen (11), die jeweils auf jeder der Seiten in einer Reifenbreitenrichtung über eine Äquatorialebene (CL) der Reifenlauffläche geformt sind und sich in der Reifenumfangsrichtung erstrecken, und eine oder eine Vielzahl von schmalen Umfangsrichtungsrillen (12), die in einer Reifenbreitenrichtung nach innen im Verhältnis zu den Haupt-Umfangsrichtungsrillen geformt sind, einschließen,
wobei die schmalen Umfangsrichtungsrillen (12) eine Rillenbreite, schmaler als eine Rillenbreite der Haupt-Umfangsrichtungsrillen (11), aufweisen und so geformt sind, dass sie einen Abstand in einem Ausmaß aufweisen, dass die Blöcke (14) auf beiden Seiten der schmalen Umfangsrichtungsrillen (12) in Berührung miteinander kommen, wenn der Reifen (1) rollt,
wobei die Breitenrichtungsrillen (13) eine Rillenbreite, schmaler als die Rillenbreite der Haupt-Umfangsrichtungsrillen (11), aufweisen und
wobei eine Position der Breitenrichtungsrille (13), die auf der einen Seite, in der Reifenbreitenrichtung, der schmalen Umfangsrichtungsrille (12) geformt ist, und eine Position der Breitenrichtungsrille (13), die auf der anderen Seite, in der Reifenbreitenrichtung, der schmalen Umfangsrichtungsrille (12) geformt ist, um einen vorbestimmten Abstand in der Reifenumfangsrichtung voneinander verschoben sind, und
**dadurch gekennzeichnet, dass**
der Reifen (1) mit einer linearen schmalen Umfangsrichtungsrille (12b) und einer welligen oder zickzackförmigen schmalen Umfangsrichtungsrille (12a) versehen ist, die abwechselnd in der Reifenbreitenrichtung angeordnet sind.

2. Reifen (1) nach Anspruch 1, wobei ein Rillenoberflächenverhältnis in einem Breitenrichtungsbereich, der durch die Haupt-Umfangsrichtungsrillen (11) umgeben wird, in einem Bereich von 4 bis 20 % festgesetzt ist.

3. Reifen (1) nach Anspruch 1 oder Anspruch 2, wobei ein Abstand zwischen den zwei Haupt-Umfangsrichtungsrillen (11) in einem Bereich von 39 bis 79 % einer Reifen-Boden-Berührungsbreite festgesetzt ist.

4. Reifen (1) nach einem der Ansprüche 1 bis 3, wobei die Rillenbreite der Breitenrichtungsrillen (13) in einem Bereich von 2,0 bis 8,0 mm festgesetzt ist.

5. Reifen (1) nach einem der Ansprüche 1 bis 4, wobei die Breitenrichtungslamellen (18) 3D-Lamellen sind.

## Revendications

1. Pneumatique (1) doté d'une pluralité de rainures de sens circonférentiel (11, 12, 15) formées sur une bande de roulement du pneumatique (1) et s'étendant dans un sens circonférentiel, une pluralité de rainures dans le sens de la largeur (13) s'étendant dans un sens croisant le sens circonférentiel, une pluralité de blocs (14, 16) étant démarqués par les rainures dans le sens circonférentiel (11, 12, 15) et les rainures dans le sens de la largeur (13), et une pluralité de lamelles dans le sens de la largeur (18) formées sur des surfaces des blocs (14, 16) et s'étendant dans le sens croisant le sens circonférentiel de pneumatique,
dans lequel une distance entre les lamelles (18) est fixée dans une plage de 4 à 12 mm,
dans lequel les rainures dans le sens circonférentiel (11, 12, 15) incluent deux rainures principales dans le sens circonférentiel (11) chacune formée sur chacun des côtés dans un sens de la largeur de pneumatique à travers un plan équatorial (CL) de la bande de roulement de pneumatique et s'étendant dans le sens circonférentiel de pneumatique, et une ou pluralité de rainures étroites dans le sens circonférentiel (12) formées à l'intérieur dans un sens de la largeur de pneumatique par rapport aux rainures principales dans le sens circonférentiel,
les rainures étroites dans le sens circonférentiel (12) présentent une largeur de rainure plus étroite qu'une largeur de rainure des rainures principales dans le sens circonférentiel (11), et sont formées pour présenter une distance dans une ampleur telle que les blocs (14) sur les deux côtés des rainures étroites dans le sens circonférentiel (12) entrent en contact les uns avec les autres lorsque le pneumatique (1) roule,
les rainures dans le sens de la largeur (13) présentent une largeur de rainure plus étroite que la largeur de rainure des rainures principales circonférentielles (11), et
une position de la rainure dans le sens de la largeur (13) formée sur un côté, dans le sens de la largeur de pneumatique, de la rainure étroite dans le sens circonférentiel (12) et une position de la rainure dans le sens de la largeur (13) formée sur l'autre côté, dans le sens de la largeur de pneumatique, de la rainure étroite dans le sens circonférentiel (12) sont décalées l'une par rapport à l'autre d'une distance prédéterminée dans le sens circonférentiel de pneumatique, et
**caractérisé en ce que**
le pneumatique (1) est doté d'une rainure étroite dans le sens circonférentiel (12b) et d'une rainure étroite ondulée ou en zigzag de sens circonférentiel (12a), qui sont agencées en alternance dans le sens de la largeur de pneumatique.

2. Pneumatique (1) selon la revendication 1, dans lequel un rapport de surface de rainure dans une région dans le sens de la largeur entourée par les rainures principales dans le sens circonférentiel (11) est fixé dans une plage de 4 à 20 %.

3. Pneumatique (1) selon la revendication 1 ou la revendication 2, dans lequel une distance entre les deux rainures principales dans le sens circonférentiel (11) est fixée dans une plage de 39 à 79 % d'une largeur de contact de pneumatique avec le sol.

4. Pneumatique (1) selon l'une quelconque des revendications 1 à 3, dans lequel la largeur de rainure des rainures dans le sens de la largeur (13) est fixée dans une plage de 2,0 à 8,0 mm.

5. Pneumatique (1) selon l'une quelconque des revendications 1 à 4, dans lequel les lamelles dans le sens de la largeur (18) sont des lamelles 3D.
